# EUROPÄISCHE PATENTSCHRIFT

(11) **EP 1 723 815 B1**
(45) Veröffentlichungstag und Bekanntmachung des Hinweises auf die Patenterteilung: **04.08.2010**
(21) Anmeldenummer: 05706927.0
(22) Anmeldetag: 19.01.2005
(51) Int. Cl.: H04W 8/20, H04M 1/2745

(54) **SYNCHRONISATION VON DATEN IN ZWEI ODER MEHR TEILNEHMERKARTEN ZUM BETREIBEN EINES MOBILEN ENDGERÄTS**
SYNCHRONIZATION OF DATA IN TWO OR MORE USER CARDS USED FOR OPERATING A MOBILE TERMINAL
SYNCHRONISATION DE DONNEES DANS AU MOINS DEUX CARTES D'ABONNE POUR LE FONCTIONNEMENT D'UN TERMINAL MOBILE

(30) Priorität: 22.01.2004 DE 102004003308
(43) Veröffentlichungstag der Anmeldung: 22.11.2006
(73) Patentinhaber: Giesecke & Devrient GmbH, 81677 München (DE)
(72) Erfinder: OESTER, Heiko, 85737 Ismaning (DE); MOSER, Markus, 86658 Egmating (DE)
(74) Vertreter: Metzler, Volker
(86) Internationale Anmeldenummer: PCT/EP2005/000490
(87) Internationale Veröffentlichungsnummer: WO 2005/071990

(56) Entgegenhaltungen:
- EP-A- 0 786 916
- EP-A- 1 404 089
- WO-A-02/31760
- FR-A- 2 821 231
- US-A1- 2003 097 382

## Beschreibung

Die Erfindung betrifft ein Verfahren zum Synchronisieren von Daten in zwei oder mehr Teilnehmerkarten zum Betreiben eines mobilen Endgeräts in einem Mobilfunksystem in Zusammenwirkung mit einem Hintergrundsystem. Weiter betrifft die Erfindung eine Teilnehmerkarte, die eine solche Synchronisation ermöglicht, sowie ein entsprechendes System aus zwei oder mehr solchen Teilnehmerkarten und dem Hintergrundsystem.

Ein Mobilfunksystem wie GSM oder UMTS besteht im Wesentlichen aus den folgenden Bestandteilen: einer Mehrzahl von Teilnehmerkarten, mobilen Endgeräten - wie z.B. Mobiltelefonen oder Miniaturcomputern mit der Möglichkeit zur Einwahl in Mobilfunknetze - , einem Mobilfunknetzwerk und einem Hintergrundsystem. In der Teilnehmerkarte sind persönliche Daten eines Benutzers abgespeichert, die u.A. im Zusammenwirken mit dem Hintergrundsystem das Betreiben des Endgeräts im Mobilfunksystem ermöglichen. Das Hintergrundsystem besteht im Wesentlichen aus einem Server oder Servernetzwerk, in dem u.A. persönliche Daten einer Mehrzahl von Benutzern abgespeichert sind, und koordiniert die Übertragung von Information, d.h. z.B. Daten und Sprache, über das Mobilfunknetzwerk.

Aus der deutschen Offenlegungsschrift DE 100 54 944 A1 ist für den Fall, wenn ein mobiles Endgerät (Mobiltelefon), das mit einer SIM-Karte betrieben wird, durch ein neues Endgerät ersetzt wird, ein Verfahren zum Übertragen von Telefonbucheinträgen, z.B. einer Kurzwahlliste oder Namen und/oder Rufnummern eines Telefonnummernverzeichnisses (ADN), von dem alten mobilen Endgerät (Mobiltelefon) zum neuen Endgerät (Mobiltelefon) bekannt. Bei dem Verfahren werden die Telefonbucheinträge zunächst vom alten Endgerät auf die SIM-Karte übertragen und anschließend von der SIM-Karte auf das neue Endgerät übertragen. Die SIM-Karte wird also als Zwischenmedium für die Übertragung der Telefonbucheinträge verwendet. Alternativ wird als Zwischenmedium statt der SIM-Karte ein Datenübertragungskabel oder ein Infrarot- oder Funksignal verwendet.

Häufig wünscht ein Benutzer jedoch umgekehrt, dass er mehrere mehr oder weniger identische SIM-Karten zur Verfügung hat, beispielsweise je eine SIM-Karte für private und geschäftliche Telefonate, die dennoch beide ihm selbst zugeordnet sind, und die er wahlweise mit ein und demselben Endgerät oder unterschiedlichen Endgeräten benutzen kann. Verschiedene Netzbetreiber im Mobilfunkbereich bieten bereits sogenannte geklonte Karten an, die bezüglich der Benutzeridentität identisch sind, die also z.B. dieselbe IMSI haben. Andere Netzbetreiber bieten sogenannte Multi-Karten an, bei denen ein und dem selben Benutzer mehrere SIM-Karten mit unterschiedlichen Benutzeridentitäten (d.h. z.B. mit unterschiedlichen IMSIs) aber mit der gleichen Rufnummer für das Endgerät (MSISDN) zugeordnet sind. Für den Benutzer haben die mehreren SIM-Karten den Nachteil, dass er Änderungen, die er an den Daten einer der SIM-Karten vornimmt, in der oder den anderen SIM-Karte(n) nachtragen muss, damit alle seine SIM-Karten auf dem gleichen aktuellsten Stand sind. Im einfachsten Fall werden die Daten von Hand nachgetragen. Dabei können Ablese- und Tippfehler auftreten. Wenn zudem in mehreren SIM-Karten Änderungen von Hand eingetragen werden, kann es zu Zuordnungsfehlern kommen, welche Daten die aktuellsten sind.

Aus dem Europäischen Patent EP 0 786 916 B1 (DE 697 15 267 T2) ist, bei einem Mobilfunksystem, bei dem ein Benutzer zwei Teilnehmerkarten (SIM-Karten) und zwei zugehörige modifizierte Endgeräte hat, ein Verfahren zum Synchronisieren (gleichartigen Aktualisieren) von gemeinsamen Daten, wie z.B. Telefonbucheinträgen oder Kurzrufnummern, auf den beiden Teilnehmerkarten bekannt, das sich zum Ziel setzt, dass für die Synchronisation der Daten die Teilnehmerkarten nicht gehandhabt werden müssen, sondern in ihren Endgeräten verbleiben können. In der US 2003/0097382 A1 wird ein Verfahren zur Synchronisierung von Daten eines Tokens (SIM-Karte) mit Daten eines anderen Geräts beschrieben, wobei auf dem Token eine Mitteilungs-Answendung zwecks Übermittlung der Daten an das andere Gerät vorgesehen ist. EP 0 786 916 B1 beschreibt zudem ein modifiziertes Endgerät, das die Synchronisation der Daten ermöglicht. Für das Verfahren ist die erste Teilnehmerkarte in dem ersten modifizierten Endgerät (Mobiltelefon) eingebaut und die zweite Teilnehmerkarte in dem zweiten modifizierten Endgerät (Mobiltelefon) eingebaut. Wenn in der ersten Teilnehmerkarte gemeinsame Daten geändert werden, werden die geänderten Daten durch das erste Endgerät aus der ersten Teilnehmerkarte ausgelesen, an das zweite Endgerät gesandt und schließlich durch das zweite Endgerät in der zweiten Teilnehmerkarte aktualisiert. Die geänderten Daten können beispielsweise durch die Nachrichtendienste SMS oder STD übertragen werden. Hierdurch kann ein Benutzer die gemeinsamen Daten in seinen beiden Teilnehmerkarten gleichartig ändern, d.h. untereinander synchronisieren, ohne dass er die Teilnehmerkarten aus den Endgeräten entnehmen muss. Ein Nachteil des Verfahrens aus EP 0 786 916 B1 ist, dass die Endgeräte so abgeändert sein müssen, dass mit ihnen die geänderten Daten aus der jeweiligen Teilnehmerkarte ausgelesen werden können bzw. in die Teilnehmerkarte eingetragen werden können. Hierdurch ist der Benutzer in seiner Auswahl eines Endgeräts eingeschränkt. Zudem ist die Aktualisierung der SIM-Karten nur in angepassten Endgeräten möglich.

Ausgehend hiervon besteht die Aufgabe der Erfindung darin, eine zuverlässige, bequeme und preiswerte Möglichkeit zu schaffen, bei einem mobilen Kommunikationssystem, bei dem zwei oder mehr Teilnehmerkarten zum Betreiben eines mobilen Endgeräts in Zusammenwirkung mit einem Hintergrundsystem verwendet werden, Daten in den zwei oder mehr Teilnehmerkarten untereinander zu synchronisieren.

Die Aufgabe wird gelöst durch ein Verfahren nach einem der unabhängigen Verfahrensansprüche und durch eine Teilnehmerkarte bzw. ein System nach einem der unabhängigen Vorrichtungsansprüche. Vorteilhafte Ausgestaltungen der Erfindung sind in den abhängigen Ansprüchen angegeben.

Bei den Verfahren zum Synchronisieren von Daten gemäß Anspruch 1 wird von einem System mit einer ersten und mindestens einer weiteren Teilnehmerkarte ausgegangen, die jeweils zum Betreiben eines mobilen Endgeräts in einem Mobilfunksystem in Zusammenwirkung mit einem Hintergrundsystem eingerichtet sind. Die Teilnehmerkarten weisen gemeinsame Daten auf, beispielsweise Telefonbucheinträge (Namen, Nummern, Kurzrufnummern etc.), die in jeder der Teilnehmerkarte zur Verfügung stehen sollen. Das Endgerät kann ein Mobiltelefon oder ein Miniaturcomputer, z.B. ein PDA, mit Einwahlmöglichkeit in Mobilfunknetze, oder umgekehrt ein "intelligentes" Mobiltelefon mit Computerfunktionalitäten sein. Die Teilnehmerkarten können zur Durchführung des Verfahrens beliebig, z.B. wahlweise bestimmungsgemäß in einem mobilen Endgerät oder in einem Kartenlesegerät (extern oder in einen Computer integriert), betrieben werden.

Ziel des Synchronisierens der Daten mit der Erfindung ist es, dass, wenn in der ersten Teilnehmerkarte geänderte Daten neu eingetragen werden oder ursprüngliche Daten durch geänderte Daten ersetzt worden sind, auch in der mindestens einen weiteren Teilnehmerkarte die geänderten Daten neu eingetragen werden bzw. die ursprünglichen Daten durch die identischen geänderten Daten ersetzt werden. Das Synchronisieren besteht aus zwei miteinander ergänzbaren Teilschritten, nämlich erstens der Mitteilung und Bereitstellung geänderter Daten durch eine erste Teilnehmerkarte, bei der die Daten zuerst geändert worden sind, und zweitens der Entgegennahme bereitgestellter geänderter Daten bei der oder den weiteren Teilnehmerkarte(n).

Der zweite Teilschritt ist im Verfahren nach Anspruch 1 angegeben, bei dem - für die weitere Teilnehmerkarte bereitgestellte und übertragene geänderte Daten durch die mindestens eine weitere Teilnehmerkarte in der weiteren Teilnehmerkarte abgespeichert werden.

Der Grundgedanke der Erfindung ist hierbei, dass die Mitteilung geänderter Daten oder die Entgegennahme der geänderten Daten (Anspruch 1) bzw. vorzugsweise sowohl die Mitteilung als auch die Entgegennahme der geänderten Daten durch die jeweilige Teilnehmerkarte durchgeführt wird. Hierdurch kann das erfindungsgemäße Verfahren zum Synchronisieren von Daten zumindest teilweise, vorzugsweise vollständig, mit jedem beliebigen mobilen Endgerät durchgeführt werden, das für das Mobilfunksystem geeignet ist. Eine Anpassung der Endgeräte wie beim Stand der Technik ist nicht erforderlich, da die Mitteilung bzw. Entgegennahme der geänderten Daten durch die Teilnehmerkarten erfolgt. Ein mobiles Endgerät oder ein Kartenleser mit entsprechender Zusatzausstattung, in dem die Teilnehmerkarte betrieben wird, liefert lediglich eine Einwahlmöglichkeit in das Mobilfunksystem, damit die geänderten Daten übertragen werden können. Da Teilnehmerkarten (z.B. SIM-Karten oder USIM-Karten) erheblich preiswerter sind als Endgeräte (z.B. Mobiltelefone), ist das erfindungsgemäße Verfahren besonders preiswert. Gleichzeitig ist die Synchronisierung gemäß der Erfindung zuverlässig und bequem, da eine zwar preiswerte aber fehleranfällige und unbequeme Eintragung der geänderten Daten in die weiteren Teilnehmerkarten von Hand nicht erforderlich ist.

Statt mit einem mobilen Endgerät kann das erfindungsgemäße Verfahren ebenso gut mit einem Kartenlesegerät durchgeführt werden, das eine Einwahlmöglichkeit in das Mobilfunksystem integriert hat oder das zum Übertragen der geänderten Daten an ein Gerät mit einer Einwahlmöglichkeit in das Mobilfunksystem angekoppelt wird.

Die entsprechende Teilnehmerkarte gemäß Anspruch 9 enthält eine Entgegennahme-Anwendung, um die Mitteilung geänderter Daten durch eine oder mehrere der weiteren Teilnehmerkarten entgegenzunehmen. Dadurch, dass die Entgegennahme-Anwendung in der Teilnehmerkarte enthalten ist, kann das erfindungsgemäße Verfahren zumindest teilweise bzw. ganz mit jedem beliebigen Endgerät durchgeführt werden, das für das Mobilfunksystem geeignet ist. Eine Anpassung der Endgeräte wie beim Stand der Technik ist nicht erforderlich. Zusätzlich können die Teilnehmerkarten zur Durchführung der Synchronisierung in jedem beliebigen Kartenlesegerät betrieben werden, das es erlaubt, die Teilnehmerkarte mit dem Hintergrundsystem zu verbinden, sei es z.B. über ein Mobilfunknetz oder über das Internet.

Daher ist gemäß der Erfindung eine zuverlässige, bequeme und preiswerte Möglichkeit geschaffen, bei einem mobilen Kommunikationssystem, bei dem zwei oder mehr Teilnehmerkarten zum Betreiben eines mobilen Endgeräts in Zusammenwirkung mit einem Hintergrundsystem verwendet werden, Daten in den zwei oder mehr Teilnehmerkarten untereinander zu synchronisieren.

Die Teilnehmerkarte hat einen Körper, in dem ein Mikroprozessor angeordnet ist, wobei der Körper jede beliebige standardisierte oder nicht standardisierte Gestalt haben kann, beispielsweise die Gestalt einer Chipkarte nach einer Norm wie z.B. ISO 7810 (z.B. ID-1, ID-00, ID-000) oder die eines volumigen Tokens. Insbesondere kann die Teilnehmerkarte eine SIM-Karte oder USIM-Karte zum Betreiben eines mobilen Endgeräts wie z.B. eines Mobiltelefons oder eines Personal Digital Assistant (PDA) sein.

Die Mitteilungs-Anwendung und/oder die Entgegennahme-Anwendung in der Teilnehmerkarte vorzusehen hat den weiteren Vorteil, dass die Mitteilungs-Anwendung und/oder die Entgegennahme-Anwendung bei Bedarf leicht gegen eine andere entsprechende Anwendung ausgetauscht werden kann, entweder durch einen Austausch der Teilnehmerkarte, oder durch ein Einprogrammieren einer anderen Anwendung.

Optional sind die erste Teilnehmerkarte und die mindestens eine weitere Teilnehmerkarte zwei körperlich getrennte Teilnehmerkarten, mit je einem gesonderten Körper und Mikroprozessor. Alternativ sind in einem einzigen Körper mindestens zwei logisch voneinander getrennte Teilnehmerkarten implementiert. In dem einzigen Körper ist wahlweise für jede Teilnehmerkarte ein gesonderter Mikroprozessor angeordnet, in dem die jeweilige Teilnehmerkarte logisch implementiert ist. Alternativ sind die mindestens zwei Teilnehmerkarten in einem einzigen Mikroprozessor implementiert, z.B. als logisch voneinander getrennte Anwendungen.

Die geänderten Daten können beispielsweise einzelne neue Rufnummern oder sonstige Telefonbucheinträge sein oder ein gesamtes geändertes Rufnummemverzeichnis ADN. Die geänderten Daten können zu bereits in der Teilnehmerkarte abgespeicherten ursprünglichen Daten hinzugefügt werden. Alternativ werden bereits in der Teilnehmerkarte abgespeicherte ursprüngliche Daten überschrieben, so dass die ursprünglichen Daten durch die geänderten Daten ersetzt werden.

Optional hat nur eine Teilnehmerkarte, die z.B. als Hauptkarte verwendet wird, die Mitteilungs-Anwendung, wobei sämtliche weiteren Teilnehmerkarten, die z.B. als Zweitkarten verwendet werden, je eine Entgegennahme-Anwendung haben. Alternativ hat jede Teilnehmerkarte sowohl eine Mitteilungs-Anwendung als auch eine Entgegennahme-Anwendung, so dass alle Teilnehmerkarten untereinander gleichberechtigt geänderte Daten mitteilen und empfangen können.

Die Teilnehmerkarte kann insbesondere eine Java-Card sein, insbesondere eine Multiapplikations-Java-Card, in der zur Mitteilungs- und/oder Entgegennahme-Anwendung weitere Anwendungen abgespeichert sein können.

Die geänderten Daten können wahlweise unter Zwischenschaltung des Hintergrundsystems übertragen werden. Beispielsweise werden die geänderten Daten an das Hintergrundsystem übertragen, dort für die Übertragung an die weitere(n) Teilnehmerkarte(n) bereitgestellt und schließlich an die weitere(n) Teilnehmerkarte(n) übertragen und auf Veranlassung der jeweiligen weiteren Teilnehmerkarte in der weiteren Teilnehmerkarte abgespeichert.

Wahlweise werden die geänderten Daten unter Zwischenschaltung eines für die Datenübermittlung eingerichteten Trägerdienstes, insbesondere eines GSM-Trägerdienstes wie SMS, USSD, CSD, HSCSD, GPRS, oder eines UMTS-Trägerdienstes, übertragen.

Alternativ kann die Übertragung der Daten z.B. mittels eines Internet-gestützten Datenübertragungsdienstes wie z.B. "integrated Web MMI" erfolgen. Bei dem Internet-gestützten Datenübertragungsdienst benennt ein Benutzer an einem Terminal, z.B. einem Personal Computer (PC) oder Notebook, mit einer Einwahlmöglichkeit in das Internet innerhalb eines Internet-Browsers gewünschte Änderungen und betroffene Teilnehmerkarten. Der Browser ermöglicht über einen Server ein Bereitstellen von geänderten Daten an gewünschte Teilnehmerkarten. Die Teilnehmerkarten können die geänderten Daten am Server abrufen. Alternativ sendet der Server die geänderten Daten an die Teilnehmerkarten.

Die Initiative, dass eine erste Teilnehmerkarte die bei ihr geänderten Daten zur Übertragung bereitstellt und an die eine oder mehrere weitere(n) Teilnehmerkarte(n) bzw. an das Hintergrundsystem überträgt, kann von der ersten Teilnehmerkarte selbst ausgehen. Mit anderen Worten verteilt die Teilnehmerkarte, bei der die Daten zuerst geändert worden sind, die geänderten Daten an oder für die weitere(n) Teilnehmerkarte(n).

Alternativ wird das Bereitstellen der geänderten Daten durch die weitere Teilnehmerkarte bzw. eine der weiteren Teilnehmerkarten initiiert. Mit anderen Worten ruft eine bestimmte Teilnehmerkarte die geänderten Daten ab, die bei der oder den anderen Teilnehmerkarte(n) eingetragen worden sind. Der Abruf kann direkt bei den Teilnehmerkarten oder beim Hintergrundsystem erfolgen.

Weiter alternativ wird das Bereitstellen der geänderten Daten durch das Hintergrundsystem initiiert, d.h. das Hintergrundsystem ruft die geänderten Daten bei den einzelnen Teilnehmerkarten ab und verteilt sie auf eigene Initiative oder auf Initiative der Teilnehmerkarten bei den Teilnehmerkarten.

Entsprechend ist in der Teilnehmerkarte wahlweise weiter eine Eigen-Initialisierungs-Anwendung abgespeichert, mit der in Abhängigkeit von einer Bedingung initialisiert werden kann, dass in der Teilnehmerkarte geänderte Daten zur Übertragung an die weitere(n) Teilnehmerkarte(n) bereitgestellt werden.

Alternativ oder zusätzlich ist in der Teilnehmerkarte weiter eine Fremd-Initialisierungs-Anwendung abgespeichert, mit der in Abhängigkeit von einer Bedingung initialisiert werden kann, dass in der mindestens einen weiteren Teilnehmerkarte oder in dem Hintergrundsystem geänderte Daten zur Übertragung an die Teilnehmerkarte oder/und ggf. an die übrigen weiteren Teilnehmerkarten bereitgestellt werden.

Das Synchronisieren kann bei jeder Inbetriebnahme einer Teilnehmerkarte durchgeführt werden und/oder bei jeder Änderung an den Daten und/oder auf Anforderung eines Benutzers der ersten oder der mindestens einen weiteren Teilnehmerkarte.

Optional sendet eine jeweilige betroffene Teilnehmerkarte bei jeder Inbetriebnahme eine Statusinformation an das Hintergrundsystem. In Abhängigkeit von einem Wert der Statusinformation überträgt das Hintergrundsystem beim Hintergrundsystem bereitstehende geänderte Daten an die betroffene Teilnehmerkarte. Die bereitstehenden Daten können beispielsweise geänderte Daten sein, die in einer anderen Teilnehmerkarte abgespeichert worden sind, während die betroffene Teilnehmerkarte nicht in Betrieb war.

Vorzugsweise haben die erste und die mindestens eine weitere Teilnehmerkarte mindestens ein Informationselement in Bezug auf das Hintergrundsystem gemeinsam. Als gemeinsames Informationselement kann insbesondere vorgesehen sein: eine Teilnehmeridentität (IMSI) und/oder ein Authentisierungs-Datenelement (Authentisierungsschlüssel Ki) und/oder eine Endgerät-Rufnummer (MSISDN).

Im folgenden wird die Erfindung anhand von Ausführungsbeispielen und unter Bezugnahme auf die Zeichnung näher erläutert, in der zeigen:
- Fig. 1: in schematischer Darstellung ein System mit vier SIM-Karten, die die gleiche IMSI haben, und einem Hintergrundsystem mit einem Server zur Verwaltung der SIM-Karten;
- Fig. 2: einen Ausschnitt aus einer Eingabemaske eines Internet-gestützten Datenübertragungsdienstes "integrated Web MMI";
- Fig. 3: ein Flussdiagramm, in dem ein Verfahren gemäß einer ersten Ausfüh- rungsform der Erfindung veranschaulicht ist, wobei immer nur eine SIM-Karte auf einmal aktiviert ist, wobei weiter in eine erste SIM- Karte A geänderte Daten eingetragen werden;
- Fig. 4: ein Flussdiagramm, in dem ein Verfahren gemäß einer zweiten Aus- führungsform der Erfindung veranschaulicht ist, wobei immer nur ei- ne SIM-Karte auf einmal aktiviert ist, wobei weiter eine erste SIM- Karte A aus ihrem deaktivierten Zustand heraus aktiviert wird; und
- Fig. 5: ein Flussdiagramm, in dem ein Teilaspekt eines erfindungsgemäßen Verfahrens veranschaulicht ist, wobei zwei SIM-Karten A, B auf ein- mal aktiviert sind.

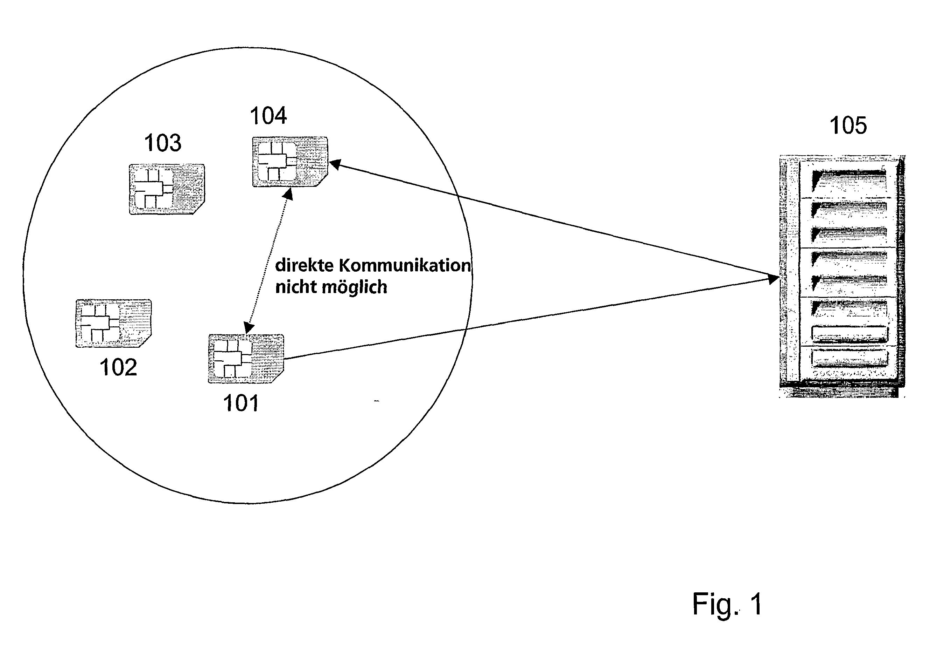

Fig.1 zeigt in schematischer Darstellung ein System mit vier SIM-Karten 101, 102, 103, 104 (Endgeräte-Elementen), die die gleiche IMSI haben, und einem Hintergrundsystem mit einem Server 105 zur Verwaltung der SIM-Karten. Die vier SIM-Karten bilden dadurch, dass sie die gleiche IMSI haben, eine SIM-Karten-Gruppe.

Der Server 105 des Hintergrundsystems enthält eine SMS-Kommunikations-Layer, d.h. eine Software-Schicht (Software-Layer), die den Versand von Kurznachrichten SMS an die SIM-Karten ermöglicht. Die SMS-Kommunikations-Layer ist an sich aus dem Stand der Technik bekannt. Eine erste SIM-Karte 101 ist bestimmungsgemäß in ein Mobiltelefon eingesetzt. Bei dieser ersten SIM-Karte 101 wird ein neuer Telefonbucheintrag ADN vorgenommen. Sobald der neue Telefonbucheintrag ADN in der ersten SIM-Karte 101 abgespeichert ist, initiiert die erste SIM-Karte 101 die Synchronisation der weiteren SIM-Karten 102, 103, 104 der SIM-Karten-Gruppe. Hierzu veranlasst die in der ersten SIM-Karte 101 implementierte Mitteilungs-Anwendung, dass eine SMS erstellt wird, die den neuen Telefonbucheintrag ADN enthält, und dass diese SMS an die weiteren SIM-Karten 102, 103, 104 der SIM-Karten-Gruppe versandt wird. Das Versenden der SMS über das Mobilfunknetz erfolgt bestimmungsgemäß über das Mobiltelefon, in das die erste SIM-Karte eingesetzt ist. Das Hintergrundsystem nimmt die SMS entgegen und veranlasst die Weiterleitung an die weiteren SIM-Karten 102, 103, 104 mit der gleichen IMSI. Je nachdem, ob eine jeweilige weitere SIM-Karte aktiviert ist oder nicht, wird die SMS unverzüglich oder später an die weitere SIM-Karte weitergeleitet.

Damit die weiteren SIM-Karten 102, 103; 104 erkennen, dass die SMS geänderte Daten enthält, die geeignet abgespeichert werden müssen, kann z.B. in der SMS zusätzlich zu den Daten ein entsprechender Indikator enthalten sein, der durch die Entgegennahme-Anwendung in der jeweiligen weiteren SIM-Karte ausgewertet wird. Die geänderten Daten werden entsprechend dem Indikator behandelt. Beispielsweise werden geänderte Daten, für die der Indikator angibt, dass es sich um einen Telefonbucheintrag handelt, in das Telefonbuch der weiteren SIM-Karte eingetragen. Analoges gilt für einen Indikator für eine Kurzrufnummer.

Der Indikator wird wahlweise durch die erste SIM-Karte 101 oder durch das Hintergrundsystem in die SMS eingefügt. Falls der Indikator durch das Hintergrundsystem eingefügt wird, enthält das Hintergrundsystem zusätzlich zu den herkömmlichen Bestandteilen eine hierzu eingerichtete Software-Schicht.

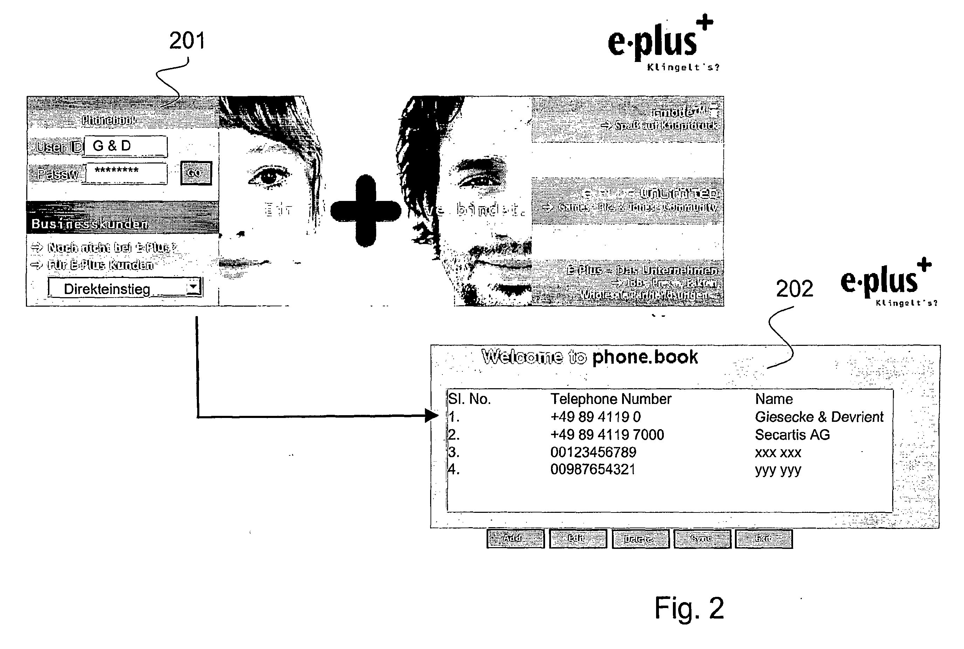

Gemäß einer weiteren Ausführungsform der Erfindung, die in Fig. 2 veranschaulicht ist, wird zur Übertragung von geänderten Daten an mehrere SIM-Karten, die ein Informations-Element (hier IMSI) gemeinsam haben, ein Internet-gestützter Datenübertragungsdienst wie z.B. "integrated Web MMI" verwendet.

Fig. 2 zeigt einen Ausschnitt aus einer Eingabemaske eines solchen Intemetgestütztes Datenübertragungsdienstes "integrated Web MMI". Die Eingabemaske wird innerhalb eines Internet-Browsers am Bildschirm eines Computers (PC, Notebook, PDA etc.) angezeigt. In der oberen Hälfte von Fig. 2 ist eine Login-Maske 201 dargestellt, in die ein Benutzer einen Benutzernamen und als Passwort eine IMSI eingibt, die für vier SIM-Karten identisch ist. Sobald der Benutzername und das Passwort richtig eingegeben worden sind, wird auf dem Bildschirm ein Fenster 202 geöffnet, in dem in einer Liste alle SIM-Karten aufgelistet sind, die unter der eingegebenen IMSI geführt werden, in Fig. 2 vier SIM-Karten, denen vier Zeilen in der Liste entsprechen. Durch weitere Eingaben in Eingabemasken auf dem Bildschirm benennt der Benutzer gewünschte geänderte Daten, die an die SIM-Karten übertragen werden sollen. Die geänderten Daten werden am Server empfangen. Der Server sendet die geänderten Daten per SMS an alle SIM-Karten mit der angegebenen IMSI, d.h. an alle SIM-Karten, die zuvor in der Liste angezeigt worden sind. Wahlweise kann der Benutzer auswählen, dass die geänderten Daten nur an eine oder einige der SIM-Karten gesandt werden. Die jeweilige SIM-Karte nimmt die SMS mit den geänderten Daten entgegen und speichert die geänderten Daten mittels der in der SIM-Karte implementierten Entgegennahme-Anwendung in der SIM-Karte ab. Auf diese Weise lassen sich alle SIM-Karten, die unter derselben IMSI betrieben werden, von einem Computer aus zentral aktualisieren und untereinander synchronisieren.

Im Einzelnen kann das Initiieren des Abspeicherns der geänderten Daten durch den Server, d.h. durch das Hintergrundsystem, erfolgen, z.B. falls die betroffene SIM-Karte aktiviert ist während die SMS losgesandt wird. Alternativ kann das Initiieren des Abspeicherns durch die betroffene SIM-Karte erfolgen, insbesondere, falls die SIM-Karte nicht aktiviert ist, z.B. weil sie in keinem Mobiltelefon eingebaut ist oder weil das zugehörige Mobiltelefon ausgeschaltet ist, so dass die SIM-Karte die SMS nicht unmittelbar entgegennehmen kann. Sobald die SIM-Karte aktiviert wird, holt die Entgegennahme-Anwendung der SIM-Karte die bereitliegende SMS ab und speichert die mit der SMS erhaltenen geänderten Daten ab.

Bei einer alternativen Ausführungsform, die ebenfalls in Fig. 2 veranschaulicht ist, wird innerhalb des Internet-Browsers eine einzelne SIM-Karte benannt, die auf geänderte Daten abgefragt werden soll und bei der, falls geänderte Daten vorliegen, diese geänderten Daten abgerufen werden sollen. In diesem Fall stellt die Mitteilungs-Anwendung der SIM-Karte die geänderten Daten zur Übertragung an den Server zur Verfügung und veranlasst den Versand einer SMS an alle SIM-Karten mit derselben IMSI.

Da Gesagte gilt analog für SIM-Karten (oder sonstige Teilnehmerkarten, z.B. USIM), die ein anderes Informations-Element gemeinsam haben, z.B. die den Authentisierungsschlüssel Ki und/oder die Endgerät-Rufnummer MSISDN, sowie für andere Mobilfunksysteme als GSM.

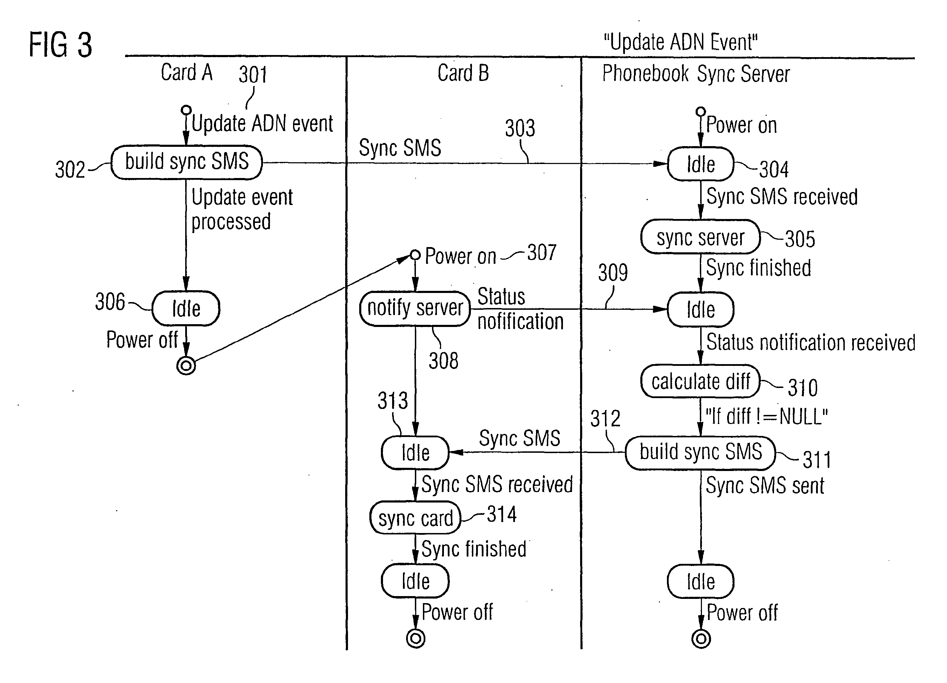

Fig. 3, 4 und 5 zeigen Flussdiagramme, in denen unterschiedliche Ausführungsformen und Aspekte von Verfahren gemäß der Erfindung veranschaulicht sind. Das dem Verfahren zu Grunde liegende System hat ein Hintergrundsystem (rechte Spalte) und zwei SIM-Karten A (linke Spalte) und B (mittlere Spalte).

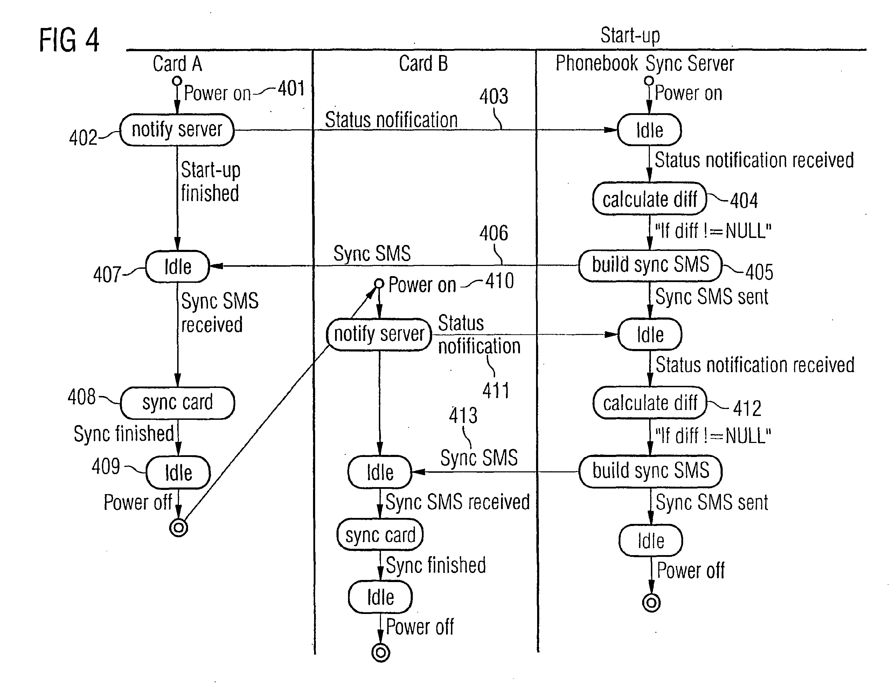

Gemäß Fig. 3 und 4 sind die SIM-Karten dazu vorgesehen, abwechselnd mit ein und demselben mobilen Endgerät betrieben zu werden. Immer nur eine einzige SIM-Karte ist auf einmal aktiviert.

Gemäß Fig. 3 wird als geänderte Daten ein ADN 301 in der ersten SIM-Karte A abgespeichert. Daraufhin erzeugt die Mitteilungs-Anwendung der ersten SIM-Karte A eine erste Aktualisierungs-SMS 302, die in einem Sendeschritt 303 an den Server des Hintergrundsystems gesandt wird. Der Server empfängt in einem Empfangsschritt 304 die SMS 302 und speichert in einem Server-Aktualisierungs-Schritt 305 die SMS zur Bereitstellung an die zweite SIM-Karte B. Zu irgend einem Zeitpunkt, nachdem die erste SIM-Karte A die erste Aktualisierungs-SMS 302 abgesandt hat, wird die erste SIM-Karte A aus dem mobilen Endgerät entnommen und dabei deaktiviert, Schritt 306. Anschließend wird die zweite SIM-Karte B in das mobile Endgerät eingesetzt und aktiviert, Schritt 307. In einem nachfolgenden Schritt 309 sendet die zweite SIM-Karte B eine Statusinformation 308 an den Server. Der Server vergleicht in einem Vergleichsschritt 310 die Statusinformation mit einer Vergleichs-Statusinformation, und erzeugt in Abhängigkeit vom Vergleichsergebnis, d.h. in Abhängigkeit vom Wert der Statusinformation, eine zweite Aktualisierungs-SMS 311, die der Server in einem Sendeschritt 312 an die zweite SIM-Karte B sendet. Das Vergleichsergebnis bzw. der Wert der Statusinformation im vorliegenden Fall aus Fig. 3 zeigt an, dass geänderte Daten beim Server des Hintergrundsystems eingegangen sind, die bei der zweiten SIM-Karte B noch nicht eingetragen sind. Aus diesem Grund wird in Fig. 3 die zweite Aktualisierungs-SMS 311 erzeugt und versandt. Die Entgegennahme-Anwendung der zweiten SIM-Karte B empfängt die zweite Aktualisierungs-SMS 311, Schritt 313, und speichert in einem Schritt 314 die mit der zweiten Aktualisierungs-SMS 311 empfangenen geänderten Daten, d.h. das ADN 301, in der zweiten SIM-Karte B ab. Die Synchronisierung der Daten in den beiden SIM-Karten A, B ist nun vollendet. Zugleich ist das Hintergrundsystem (der Server) mit den beiden SIM-Karten A, B synchronisiert.

Gemäß Fig. 4 wird im Vergleich zu Fig. 3 davon ausgegangen, dass die erste SIM-Karte A zunächst deaktiviert ist, z.B. weil das mobile Endgerät, in dem die SIM-Karte eingesetzt ist, ausgeschaltet ist. In einem ersten Schritt 401 wird das mobile Endgerät eingeschaltet und dadurch die erste SIM-Karte aktiviert. Daraufhin lädt die Mitteilungs-Anwendung der ersten SIM-Karte A eine erste Statusinformation 402, die in einem Sendeschritt 403 an den Server des Hintergrundsystems gesandt wird. Analog wie für Fig. 3 beschrieben führt der Server einen Vergleich durch, 404, stellt fest, dass die erste SIM-Karte A aktualisiert werden muss und sendet eine erste Aktualisierungs-SMS 405 an die erste SIM-Karte A, Schritt 406. Die erste SIM-Karte A empfängt in Schritt 407 die erste Aktualisierungs-SMS 405 und übernimmt die mit der ersten Aktualisierungs-SMS 405 empfangenen geänderten Daten, so dass die erste SIM-Karte A mit dem Hintergrundsystem synchronisiert wird. Nachdem die erste SIM-Karte A synchronisiert worden ist, wird in dem mobilen Endgerät die erste SIM-Karte A entfernt, Schritt 409, und im Austausch dafür die zweite SIM-Karte B eingesetzt und aktiviert, Schritt 410. Daraufhin wird die zweite SIM-Karte B über eine Statusinformation 411, die von der zweiten SIM-Karte B zum Server gesandt wird, eine Überprüfung der Statusinformation (Vergleich) 412 beim Server und eine zweite Aktualisierungs-SMS 413, die vom Server zur zweiten SIM-Karte B gesandt wird, mit dem Hintergrundsystem und damit zugleich mit der der ersten SIM-Karte A synchronisiert.

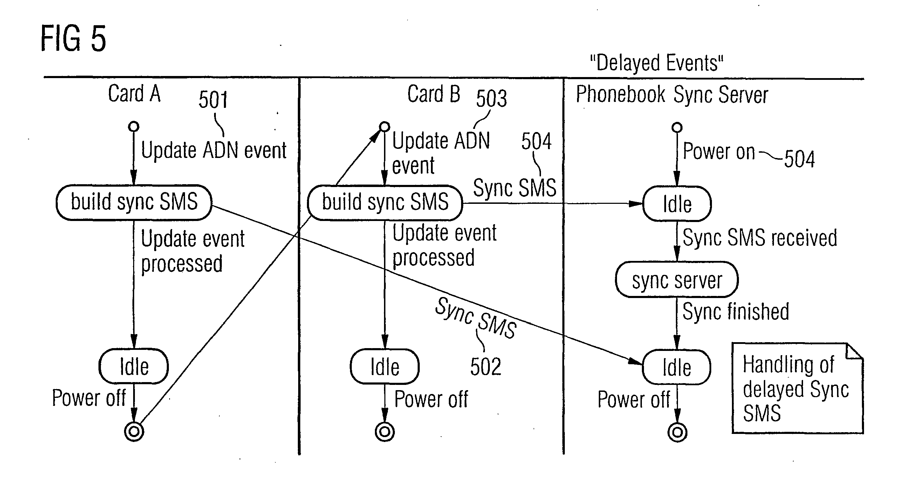

Gemäß der Ausführungsform der Erfindung, die in Fig. 5 veranschaulicht ist, sind zwei SIM-Karten A, B auf einmal aktiviert. Dies kann zu Problemen führen, falls beide SIM-Karten A, B aktualisiert werden und die Aktualisierungen einander widersprechen oder einander ausschließen. Die erste SIM-Karte A wird in einem ersten mobilen Endgerät betrieben. Die zweite SIM-Karte B wird in einem zweiten mobilen Endgerät betrieben. In der ersten SIM-Karte A wird in Schritt 501 ein ADN als geänderte Daten eingetragen. Die erste SIM-Karte A sendet daraufhin mittels ihrer Mitteilungs-Anwendung eine erste Aktualisierungs-SMS 502 an das Hintergrundsystem. Nachfolgend wird in der zweiten SIM-Karte B in Schritt 503 ein ADN als geänderte Daten eingetragen. Die zweite SIM-Karte B sendet daraufhin eine zweite Aktualisierungs-SMS 504 an das Hintergrundsystem. Die Aktualisierungs-SMS 502, 504 werden im Server des Hintergrundsystems zwischengepuffert und nachfolgend nach einer vorbestimmten Priorität und Reihenfolge ausgewertet. Beispielsweise haben Aktualisierungen die durch eine SIM-Karte initiiert sind, eine höhere Priorität als Aktualisierungen, die über einen Datenübertragungsdienst wie z.B. "integrated Web MMI" initiiert sind. Jüngere Aktualisierungen haben beispielsweise eine höhere Priorität als ältere Aktualisierungen.

Im Folgenden werden weitere mögliche Aktualisierungsregeln angeführt. Falls eine vermeintliche Aktualisierung keine Änderung beinhaltet, wird sie nicht durchgeführt. Falls nur Daten in einer ersten Teilnehmerkarte geändert werden, wird der Server an Hand der ersten Teilnehmerkarte synchronisiert, wobei weitere Teilnehmerkarten z.B. später an Hand des Servers synchronisiert werden. Falls nur Daten im Server aktualisiert werden, beispielsweise über eine Eingabe in einem Datenübertragungsdienst wie z.B. "integrated Web MMI", wird jede gerade aktivierte Teilnehmerkarte an Hand des Servers synchronisiert.

Eine laufend oder anderweitig regelmäßig aktualisierte weitere Teilnehmkarte wird wahlweise als Backup-Speicher für die in der ersten Teilnehmerkarte enthaltenen Daten verwendet, damit die Daten nicht verloren gehen, falls die erste Teilnehmerkarte fehlfunktioniert oder ganz ausfällt.

## Patentansprüche

1. Verfahren zum Synchronisieren von Daten in einer ersten und mindestens einer weiteren Teilnehmerkarte (101-104), die gemeinsame Daten aufweisen, und die jeweils zum Betreiben eines mobilen Endgeräts in einem Mobilfunksystem in Zusammenwirkung mit einem Hintergrundsystem (105) eingerichtet sind, wobei zum Synchronisieren, wenn in der ersten Teilnehmerkarte geänderte Daten abgespeichert worden sind, auch in der mindestens einen weiteren Teilnehmerkarte die identischen geänderten Daten abgespeichert werden, wobei bei dem Verfahren
- für die weitere Teilnehmerkarte bereitgestellte und übertragene geänderte Daten in der weiteren Teilnehmerkarte abgespeichert werden,
**dadurch gekennzeichnet, dass**
in der weiteren Teilnehmerkarte eine Entgegennahme-Anwendung abgespeichert ist und dass die Daten durch die Entgegennahme-Anwendung in der weiteren Teilnehmerkarte abgespeichert werden.

2. Verfahren nach Anspruch 1, wobei bei dem Verfahren
- in der ersten Teilnehmerkarte abgespeicherte geänderte Daten zur Übertragung an die weitere Teilnehmerkarte bereitgestellt werden und
- die geänderten Daten an die weitere Teilnehmerkarte oder zum Bereitstellen für die weitere Teilnehmerkarte übertragen werden, wobei in der ersten Teilnehmerkarte eine Mitteilungs-Anwendung abgespeichert ist, und
dass die geänderten Daten durch die Mitteilungs-Anwendung zur Übertragung an die weitere Teilnehmerkarte bereitgestellt werden.

3. Verfahren nach Anspruch 2, wobei die geänderten Daten unter Zwischenschaltung des Hintergrundsystems übertragen werden.

4. Verfahren nach Anspruch 2 oder 3, wobei die geänderten Daten unter Zwischenschaltung eines für die Datenübermittlung eingerichteten Trägerdienstes, insbesondere eines GSM-Trägerdienstes wie SMS, USSD, CSD, HSCSD, GPRS, oder eines UMTS-Trägerdienstes oder eines Internet-gestützten Übertragungsdienstes, übertragen werden.

5. Verfahren nach einem der Ansprüche 2 bis 4, wobei das Bereitstellen der geänderten Daten durch die erste Teilnehmerkarte, durch die weitere Teilnehmerkarte bzw. eine der weiteren Teilnehmerkarten oder durch das Hintergrundsystem initiiert wird.

6. Verfahren nach einem der Ansprüche 2 bis 5, wobei das Synchronisieren anlässlich jeder Inbetriebnahme einer Teilnehmerkarte oder/ und anlässlich jeder Änderung von Daten oder / und auf Anforderung eines Benutzers der ersten oder der mindestens einen weiteren Teilnehmerkarte durchgeführt wird.

7. Verfahren nach einem der Ansprüche 2 bis 6, wobei jede Teilnehmerkarte anlässlich jeder Inbetriebnahme eine Statusinformation an das Hintergrundsystem sendet, und wobei das Hintergrundsystem in Abhängigkeit von einem Wert der Statusinformation beim Hintergrundsystem bereitstehende geänderte Daten an die jeweilige Teilnehmerkarte überträgt.

8. Verfahren nach einem der Ansprüche 2 bis 7, wobei die erste und die mindestens eine weitere Teilnehmerkarte mindestens ein Informationselement in Bezug auf das Hintergrundsystem gemeinsam haben, wobei als gemeinsames Informationselement insbesondere vorgesehen ist: eine Teilnehmeridentität, IMSI, und/oder ein Authentisierungs-Datenelement, Authentisierungsschlüssel Ki, und/oder eine Endgerät-Rufnummer, MSISDN.

9. Teilnehmerkarte (101-104) zum Betreiben eines mobilen Endgeräts in einem Mobilfunksystem in Zusammenwirkung mit einem Hintergrundsystem (105), wobei in der Teilnehmerkarte abgespeichert sind:
- Daten, die in mindestens einer weiteren, ebenfalls zum Betreiben eines mobilen Endgeräts in dem Mobilfunksystem in Zusammenwirkung mit dem Hintergrundsystem eingerichteten Teilnehmerkarte ebenfalls abgespeichert sind, und
- eine Mitteilungs-Anwendung,
wobei die Mitteilungs-Anwendung dazu eingerichtet ist, dass, wenn in der Teilnehmerkarte geänderte Daten abgespeichert werden,
- die in der Teilnehmerkarte abgespeicherten geänderten Daten zur Übertragung an die weitere Teilnehmerkarte bereitgestellt werden, und
- die geänderten Daten an die weitere Teilnehmerkarte übertragen werden, so dass
- die geänderten Daten in der weiteren Teilnehmerkarte abspeichert werden können,
**dadurch gekennzeichnet, dass** eine Entgegennahme-Anwendung in der Teilnehmerkarte abgespeichert ist, und die Entgegennahme-Anwendung dazu eingerichtet ist, dass, wenn an die weitere Teilnehmerkarte geänderte Daten übertragen werden, die geänderten Daten in der weiteren Teilnehmerkarte abspeichert werden.

10. Teilnehmerkarte nach Anspruch 9, in der weiter abgespeichert ist
- eine Eigen-Initialisierungs-Anwendung, mit der in Abhängigkeit von einer Bedingung initialisiert werden kann, dass in der Teilnehmerkarte vorhandene geänderte Daten durch die Teilnehmerkarte zur Übertragung an die weiteren Teilnehmerkarte bereitgestellt werden, und/ oder
- eine Fremd-Initialisierungs-Anwendung, mit der in Abhängigkeit von einer Bedingung initialisiert werden kann, dass in der mindestens einen weiteren Teilnehmerkarte vorhandene geänderte Daten zur Übertragung an die Teilnehmerkarte oder/und ggf. an die übrigen weiteren Teilnehmerkarten bereitgestellt werden.

11. Teilnehmerkarte nach Anspruch 10, wobei die Bedingung umfasst,
- ein Abspeichern von geänderten Daten in mindestens einer von der Teilnehmerkarte und der mindestens einen weiteren Teilnehmerkarte und/ oder
- eine Inbetriebnahme mindestens einer Teilnehmerkarte und/ oder
- eine Eingabe durch einen Benutzer und/oder
- einen vorbestimmten Wert einer Statusinformation.

12. System mit einer ersten Teilnehmerkarte (101-104) nach einem der Ansprüche 9 bis 11, mindestens einer weiteren Teilnehmerkarte (101-104) nach einem der Ansprüche 9 bis 11 und einem Hintergrundsystem (105), mit dem die Teilnehmerkarten betreibbar sind.

13. System nach Anspruch 12, wobei die erste und die mindestens eine weitere Teilnehmerkarte mindestens ein Informationselement in Bezug auf das Hintergrundsystem gemeinsam haben, wobei als gemeinsames Informationselement insbesondere vorgesehen ist: eine Teilnehmeridentität, IMSI, und/ oder ein Authentisierungs-Datenelement, Authentisierungsschlüssel Ki, und/ oder eine Endgerät-Rufnummer, MSISDN.

## Claims

1. A method for synchronizing data in a first and at least one further subscriber card (101-104) which have common data, and which are in each case adapted for operating a mobile terminal in a mobile communication system in cooperation with a background system (105), wherein for synchronizing, when changed data have been stored in the first subscriber card, the identical changed data are also stored in the at least one further subscriber card, wherein, in the method,
- changed data readied for the further subscriber card and transmitted are stored in the further subscriber card,
**characterized in that**
in the further subscriber card there is stored an acceptance application, and the data are stored in the further subscriber card by the acceptance application.

2. The method according to claim 1, wherein, in the method,
- changed data stored in the first subscriber card are readied for transmission to the further subscriber card, and
- the changed data are transmitted to the further subscriber card or for readying for the further subscriber card, wherein in the first subscriber card there is stored a notification application, and the changed data are readied for transmission to the further subscriber card by the notification application.

3. The method according to claim 2, wherein the changed data are transmitted through the intermediary of the background system.

4. The method according to claim 2 or 3, wherein the changed data are transmitted through the intermediary of a bearer service adapted for data transmission, in particular a GSM bearer service such as SMS, USSD, CSD, HSCSD, GPRS, or a UMTS bearer service or an Internet-based transmission service.

5. The method according to any of claims 2 to 4, wherein the readying of the changed data is initiated by the first subscriber card, by the further subscriber card or one of the further subscriber cards, or by the background system.

6. The method according to any of claims 2 to 5, wherein the synchronizing is carried out upon each start-up of a subscriber card or/and upon each change of data or/and on request of a user of the first or the at least one further subscriber card.

7. The method according to any of claims 2 to 6, wherein each subscriber card sends status information to the background system upon each start-up, and wherein the background system transmits changed data ready in the background system to the particular subscriber card in accordance with a value of the status information.

8. The method according to any of claims 2 to 7, wherein the first and the at least one further subscriber card have in common at least one information element relating to the background system, wherein there is provided as the common information element in particular: a subscriber identity, IMSI, and/or an authentication data element, authentication key Ki, and/or a terminal call number, MSISDN.

9. A subscriber card (101-104) for operating a mobile terminal in a mobile communication system in cooperation with a background system (105), wherein there are stored in the subscriber card:
- data which are likewise stored in at least one further subscriber card likewise adapted for operating a mobile terminal in the mobile communication system in cooperation with the background system, and
- a notification application,
wherein the notification application is adapted such that, when changed data are stored in the subscriber card,
- the changed data stored in the subscriber card are readied for transmission to the further subscriber card, and
- the changed data are transmitted to the further subscriber card, so that
- the changed data can be stored in the further subscriber card,
**characterized in that** an acceptance application is stored in the subscriber card, and the acceptance application is adapted such that, when changed data are transmitted to the further subscriber card, the changed data are stored in the further subscriber card.

10. The subscriber card according to claim 9, in which there is further stored
- an internal initialization application with which initialization can be effected in accordance with a condition that changed data existing in the subscriber card are readied by the subscriber card for transmission to the further subscriber card, and/or
- an external initialization application with which initialization can be effected in accordance with a condition that changed data existing in the at least one further subscriber card are readied for transmission to the subscriber card or/and optionally to the other further subscriber cards.

11. The subscriber card according to claim 10, wherein the condition comprises
- a storing of changed data in at least one of the subscriber card and the at least one further subscriber card and/or
- a start-up of at least one subscriber card and/or
- an input by a user and/or
- a predetermined value of status information.

12. A system having a first subscriber card (101-104) according to any of claims 9 to 11, at least one further subscriber card (101-104) according to any of claims 9 to 11 and a background system (105) with which the subscriber cards are operable.

13. The system according to claim 12, wherein the first one and the at least one further subscriber card have in common at least one information element relating to the background system, wherein there is provided as the common information element in particular: a subscriber identity, IMSI, and/or an authentication data element, authentication key Ki, and/or a terminal call number, MSISDN.

## Revendications

1. Procédé de synchronisation de données dans une première et au moins une autre carte d'abonné (101, 104) qui comportent des données communes et qui sont respectivement équipées pour exploiter un terminal mobile dans un système de radiocommunication mobile en concomitance avec un système d'arrière-plan (105), dans lequel, pour la synchronisation, quand des données modifiées ont été mémorisées dans la première carte d'abonné, les données identiques modifiées sont également mémorisées dans la au moins une autre carte d'abonné, et dans lequel
- des données modifiées mises à disposition et transmises pour l'autre carte d'abonné sont mémorisées dans l'autre carte d'abonné,
**caractérisé en ce**
**qu'**une application de réception est mémorisée dans l'autre carte d'abonné et en ce que les données sont mémorisées dans l'autre carte d'abonné par l'application de réception.

2. Procédé selon la revendication 1, dans lequel
- des données modifiées mémorisées dans la première carte d'abonné sont mises à disposition pour la transmission à l'autre carte d' abonné, et
- les données modifiées sont transmises à l'autre carte d'abonné ou pour la mise à disposition à l'autre carte d'abonné, une application de messagerie étant mémorisée dans la première carte d'abonné et les données modifiées étant mises à disposition par l'application de messagerie pour la transmission à l'autre carte d'abonné.

3. Procédé selon la revendication 2, les données modifiées étant transmises sous connexion intermédiaire du système d'arrière-plan.

4. Procédé selon la revendication 2 ou 3, les données modifiées étant transmises sous connexion intermédiaire d'un service de porteuse configuré pour le transfert de données, notamment d'un service de porteuse GSM comme SMS, USSD, CSD, HSCSD, GPRS, ou d'un service de porteuse UMTS ou d'un service de transmission basé sur Internet.

5. Procédé selon une des revendications de 2 à 4, la mise à disposition des données modifiées étant initiée par la première carte d'abonné, par l'autre carte d'abonné ou par une des autres cartes d'abonnés ou par le système d'arrière-plan.

6. Procédé selon une des revendications de 2 à 5, la synchronisation étant effectuée lors de chaque mise en service d'une carte d'abonné et/ou lors de chaque modification de données et/ou sur demande d'un utilisateur de la première ou de la au moins une autre carte d'abonné.

7. Procédé selon une des revendications de 2 à 6, chaque carte d'abonné envoyant lors de chaque mise en service une information de statut au système d'arrière-plan, et le système d'arrière-plan transmettant à la carte d'abonné respective, en fonction d'une valeur de l'information de statut, des données modifiées disponibles dans le système d'arrière-plan.

8. Procédé selon une des revendications de 2 à 7, la première et la au moins une autre carte d'abonné ayant en commun au moins un élément d'information en relation avec le système d'arrière-plan, il étant prévu notamment en tant qu'élément d'information commun : une identité d'abonné, IMSI, et/ou un élément de données d'authentification, clé d'authentification Ki, et/ou un numéro de terminal, MSISDN.

9. Carte d'abonné (101, 104) destinée à l'exploitation d'un terminal mobile dans un système de radiocommunication mobile en concomitance avec un système d'arrière-plan (105), ce qui suit étant mémorisé dans la carte d'abonné :
- des données qui sont également mémorisées dans au moins une autre carte d'abonné également configurée pour l'exploitation d'un terminal mobile dans le système de radiocommunication mobile en concomitance avec le système d'arrière-plan, et
- une application de messagerie,
l'application de messagerie étant configurée de telle sorte que, quand des données modifiées sont mémorisées dans la carte d'abonné,
- les données modifiées mémorisées dans la carte d'abonné sont mises à disposition pour la transmission à l'autre carte d'abonné, et
- les données modifiées sont transmises à l'autre carte d'abonné, de telle manière que
- les données modifiées peuvent être mémorisées dans l'autre carte d'abonné,
**caractérisée en ce qu'**une application de réception est mémorisée dans la carte d'abonné et que l'application de réception est configurée de telle sorte que, quand des données modifiées sont transmises à l'autre carte d'abonné, les données modifiées sont mémorisées dans l'autre carte d'abonné.

10. Carte d'abonné selon la revendication 9, dans laquelle est en outre mémorisé ce qui suit :
- une application d'initialisation propre avec laquelle une initialisation peut être effectuée en fonction d'une condition, laquelle consistant en ce que des données modifiées se trouvant dans la carte d'abonné sont mises à disposition par la carte d'abonné pour la transmission aux autres cartes d'abonné, et/ou
- une application d'initialisation étrangère avec laquelle une initialisation peut être effectuée en fonction d'une condition, laquelle consistant en ce que des données modifiées se trouvant dans la au moins une autre carte d'abonné sont mises à disposition pour la transmission à la carte d'abonné et/ou le cas échéant aux autres cartes d'abonnés restantes.

11. Carte d'abonné selon la revendication 10, la condition incluant
- une mémorisation de données modifiées dans au moins une des cartes d'abonné et dans la au moins une autre carte d'abonné et/ou
- une mise en service d'au moins une carte d'abonné et/ou
- une entrée effectuée par un utilisateur et/ou
- une valeur prédéterminée d'une information de statut.

12. Système comportant une première carte d'abonné (101,104) selon une des revendications de 9 à 11, au moins une autre carte d'abonné (101,104) selon une des revendications de 9 à 11, et un système d'arrière-plan (105) avec lequel les cartes d'abonnés sont exploitables.

13. Système selon la revendication 12, la première et la au moins une autre carte d'abonné ayant en commun au moins un élément d'information en relation avec le système d'arrière-plan, il étant prévu notamment en tant qu'élément d'information commun : une identité d'abonné, IMSI, et/ou un élément de données d'authentification, clé d'authentification Ki, et/ou un numéro de terminal, MSISDN.
